# EUROPEAN PATENT APPLICATION

(11) **EP 4 772 586 A1**
(43) Date of publication of application: **08.07.2026**
(21) Application number: 24859536.5
(22) Date of filing: 20.08.2024
(51) Int. Cl.: C09D 11/38, B41J 2/01, B41M 5/00

(54) **ACTINIC RADIATION CURABLE INK COMPOSITION FOR INKJET PRINTING**

(30) Priority: 30.08.2023 JP 2023139465
(71) Applicant: Sakata INX Corporation, Osaka-shi, Osaka 541-0047 (JP)
(72) Inventor: SHIOZAKI,Daigo, Osaka-shi, Osaka 541-0047 (JP); NITTA,Ryoichi, Osaka-shi, Osaka 541-0047 (JP); KAWAMOTO,Kenji, Osaka-shi, Osaka 541-0047 (JP); NAKASHIMA,Okinori, Osaka-shi, Osaka 541-0047 (JP)
(74) Representative: Cabinet Beau de Loménie
(86) International application number: PCT/JP2024/029433
(87) International publication number: WO 2025/047503

(57) **Abstract**

An actinic energy ray-curable inkjet ink composition containing a photopolymerizable compound, wherein the photopolymerizable compound contains: (A) a hydroxyl group-containing polyfunctional monomer; (B) a monomer and/or oligomer having an amino group and/or an amide group; and (C) a monofunctional monomer other than (B), and in the photopolymerizable compound, a proportion of the hydroxyl group-containing polyfunctional monomer is 2 mass% or more and 20 mass% or less, and a proportion of the monofunctional monomer is 50 mass% or more. The actinic energy ray-curable inkjet ink composition is excellent in adhesion, flexibility, stretchability, alcohol resistance, and printing image quality.

## Description

### TECHNICAL FIELD

The present invention relates to an actinic energy ray-curable inkjet ink composition.

### BACKGROUND ART

Conventionally, in an actinic energy ray-curable inkjet ink, it has been proposed to blend a large amount of a monofunctional monomer in order to improve adhesion to a base material (for example, Patent Documents 1 to 3).

### PRIOR ART DOCUMENTS

### PATENT DOCUMENTS

Patent Document 1: WO 2007/055332 A
Patent Document 2: WO 2013/027672 A
Patent Document 3: JP-A-2014-70135

### SUMMARY OF THE INVENTION

### PROBLEMS TO BE SOLVED BY THE INVENTION

When the amount of the monofunctional monomer is increased, adhesion and stretchability are improved, but resistance to a solvent and an ink deteriorates. For example, at the time of single-pass printing, a cured coating film is partially dissolved in an ink of a secondary color, and dots are hardly spread on the coating film, which adversely affects printing image quality. In order to achieve sufficient image quality, it is necessary to blend a large amount of a polyfunctional monomer, but in that case, physical properties such as adhesion deteriorate. It is therefore difficult to achieve both image quality and adhesion and stretchability.

In light of this, an object of the present invention is to provide an actinic energy ray-curable inkjet ink composition that is excellent in adhesion, flexibility, stretchability, alcohol resistance, and printing image quality.

### MEANS FOR SOLVING THE PROBLEMS

That is, the present invention has the following configuration.
[1] An actinic energy ray-curable inkjet ink composition containing a photopolymerizable compound, wherein the photopolymerizable compound contains: (A) a hydroxyl group-containing polyfunctional monomer; (B) a monomer and/or oligomer having an amino group and/or an amide group; and (C) a monofunctional monomer other than (B), and in the photopolymerizable compound, a proportion of the hydroxyl group-containing polyfunctional monomer is 2 mass% or more and 20 mass% or less, and a proportion of the monofunctional monomer is 50 mass% or more.
[2] The actinic energy ray-curable inkjet ink composition according to [1], wherein a proportion of the monomer and/or oligomer having an amino group and/or an amide group in the photopolymerizable compound is preferably 10 mass% or more and 40 mass% or less.
[3] The actinic energy ray-curable inkjet ink composition according to [1] or [2], wherein the actinic energy ray-curable inkjet ink composition contains a polyfunctional monomer other than (A) and (B), and a total proportion of the hydroxyl group-containing polyfunctional monomer and the polyfunctional monomer in the photopolymerizable compound is preferably 20 mass% or less.
[4] The actinic energy ray-curable inkjet ink composition according to any one of [1] to [3], wherein the monomer and/or oligomer having an amino group and/or an amide group preferably contains acryloylmorpholine and/or N-vinylcaprolactam.
[5] The actinic energy ray-curable inkjet ink composition according to [4], wherein the monomer and/or oligomer having an amino group and/or an amide group preferably contains an acrylated amine compound having two photopolymerizable functional groups and two amino groups in a molecule.
[6] The actinic energy ray-curable inkjet ink composition according to any one of [1] to [5], wherein a total proportion of photopolymerizable compounds having a glass transition temperature of 10°C or lower contained in the photopolymerizable compound is preferably 20 mass% or more.
[7] The actinic energy ray-curable inkjet ink composition according to any one of [1] to [6], wherein the actinic energy ray-curable inkjet ink composition preferably contains a colorant.

### EFFECT OF THE INVENTION

The actinic energy ray-curable inkjet ink composition of the present invention is excellent in adhesion, flexibility, stretchability, alcohol resistance, and printing image quality by containing a specific photopolymerizable component.

### MODE FOR CARRYING OUT THE INVENTION

Hereinafter, the actinic energy ray-curable inkjet ink composition of the present invention (hereinafter, also referred to as "ink composition") will be described in detail.

The actinic energy ray-curable inkjet ink composition of the present invention contains a photopolymerizable compound. The photopolymerizable compound contains: (A) a hydroxyl group-containing polyfunctional monomer; (B) a monomer and/or oligomer having an amino group and/or an amide group; and (C) a monofunctional monomer other than (B). In the photopolymerizable compound, the proportion of the hydroxyl group-containing polyfunctional monomer is 2 mass% or more and 20 mass% or less, and the proportion of the monofunctional monomer is 50 mass% or more.

### <Hydroxyl group-containing polyfunctional monomer (A)>

The hydroxyl group-containing polyfunctional monomer may have two or more photopolymerizable functional groups and a hydroxyl group in the molecule. Examples thereof include 2-hydroxy-3-methacrylpropyl acrylate, glycerin diacrylate, isocyanuric acid EO-modified diacrylate, pentaerythritol tri(meth)acrylate, dipentaerythritol penta(meth)acrylate, tripentaerythritol hexa(meth)acrylate, and tripentaerythritol penta(meth)acrylate. The hydroxyl group-containing polyfunctional monomer may be used singly or in combination of two or more thereof. From the viewpoint of adhesion, the hydroxyl group-containing polyfunctional monomer preferably has two photopolymerizable functional groups and a hydroxyl group in the molecule.

The proportion of the hydroxyl group-containing polyfunctional monomer in the photopolymerizable compound is 2 mass% or more and 20 mass% or less. When the proportion of the hydroxyl group-containing polyfunctional monomer in the photopolymerizable compound is less than 2 mass%, alcohol resistance and image quality (dot diameter) deteriorate, and when the proportion is more than 20 mass%, adhesion, flexibility, and stretchability deteriorate. The proportion of the hydroxyl group-containing polyfunctional monomer in the photopolymerizable compound is more preferably 5 mass% or more and 12 mass% or less.

### <(B) Monomer and/or oligomer having amino group and/or amide group>

Examples of the monomer and/or oligomer having an amino group and/or an amide group include various (meth)acrylamide-based monomers such as acrylamide and acryloylmorpholine, vinylamide-based monomers such as N-vinylpyrrolidone, N-vinylformamide, N-vinylacetamide, N-vinylcaprolactam, N-vinylcarbazole, and vinylmethyloxazolidinone, and acrylated amine compounds such as trade name "CN371", "CN373", "CN386", "CN501", "CN550", and "CN551" (all manufactured by Sartomer). Among them, it is preferable to use a monomer having an amino group and/or an amide group, it is more preferable to use acryloylmorpholine and/or N-vinylcaprolactam, and it is further preferable to use an acrylated amine compound having two photopolymerizable functional groups and two amino groups in the molecule in combination with acryloylmorpholine and/or N-vinylcaprolactam. The monomer and/or oligomer having an amino group and/or an amide group may be used singly or in combination of two or more thereof.

The content of the monomer and/or oligomer having an amino group and/or an amide group can be arbitrarily determined. The proportion of the monomer and/or oligomer having an amino group and/or an amide group in the photopolymerizable compound is preferably 10 mass% or more and 40 mass% or less, and more preferably 15 mass% or more and 30 mass% or less from the viewpoint of curability. When the proportion of the monomer and/or oligomer having an amino group and/or an amide group in the photopolymerizable compound is less than 10 mass%, curability and tackiness may deteriorate.

### <(C) Monofunctional monomer>

The monofunctional monomer other than (B) (hereinafter, also referred to as "monofunctional monomer") may be any monomer used in a known actinic energy ray-curable inkjet ink composition. Examples thereof include butyl (meth)acrylate, isobutyl (meth)acrylate, tertiary butyl (meth)acrylate, octyl (meth)acrylate, 2-ethylhexyl (meth)acrylate, decyl (meth)acrylate, isomyristyl (meth)acrylate, stearyl (meth)acrylate, isostearyl (meth)acrylate, isobornyl (meth)acrylate, lauryl (meth)acrylate, cyclic trimethylolpropane formal (meth)acrylate, cyclohexyl (meth)acrylate, butyl cyclohexyl acrylate, trimethyl cyclohexyl acrylate, adamantyl (meth)acrylate, dicyclopentanyl (meth)acrylate, dicyclopentenyl (meth)acrylate and other acrylates, styrene, benzyl (meth)acrylate, 2-phenoxyethyl (meth)acrylate, and ethylene oxide-modified products thereof, ethyl carbitol (meth)acrylate, 2-methoxyethyl acrylate, polyethylene glycol (meth)acrylate, isoamyl (meth)acrylate, hydroxymethyl (meth)acrylate, hydroxyethyl (meth)acrylate, hydroxypropyl (meth)acrylate, hydroxybutyl (meth)acrylate, hydroxyphenoxypropyl (meth)acrylate, 2-ethylhexyl-diglycol (meth)acrylate, 2-acryloyloxyethyl hexahydrophthalic acid, butoxyethyl acrylate, ethoxydiethylene glycol (meth)acrylate, ethyl carbitol acrylate, methoxydiethylene glycol (meth)acrylate, methoxypolyethylene glycol (meth)acrylate, methoxypropylene glycol (meth)acrylate, tetrahydrofurfuryl (meth)acrylate, (2-methyl-2-ethyl-1,3-dioxolane-4-yl)methyl (meth)acrylate, (3-ethyl oxetane-3-yl)methyl methacrylate, phenol ethylene glycol-modified acrylate, 2-hydroxypropyl (meth)acrylate, 2-hydroxy-3-phenoxypropyl (meth)acrylate, 2-acryloyloxy ethyl succinic acid, 2-acryloyloxy ethyl phthalic acid, 2-acryloyloxyethyl-2-hydroxyethyl-phthalic acid, lactone-modified flexible acrylate, t-butyl cyclohexyl (meth)acrylate, 3,3,5-trimethylcyclohexyl acrylate, and vinyloxyethoxyethyl (meth)acrylate. The monofunctional monomer may be used singly or in combination of two or more thereof.

The proportion of the monofunctional monomer in the photopolymerizable compound is 50 mass% or more. The proportion of the monofunctional monomer in the photopolymerizable compound is preferably 50 mass% or more and 90 mass% or less, and more preferably 60 mass% or more and 85 mass% or less from the viewpoint of flexibility and stretchability.

### <Polyfunctional monomer other than (A) and (B)>

Examples of the polyfunctional monomer other than (A) and (B) (hereinafter, also referred to as "polyfunctional monomer") include known compounds having two or more ethylenically unsaturated bonds, for example, the following polyfunctional (meth)acrylate-based compounds and vinyl ether group-containing (meth)acrylate-based compounds. The polyfunctional monomer may be used singly or in combination of two or more thereof.

Examples of the polyfunctional (meth)acrylate-based compound include bifunctional monomers such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, tricyclodecane dimethylol dicaprolactonate di(meth)acrylate, cyclohexane dimethanol di(meth)acrylate, dicyclopentanyl di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, bisphenol F tetraethylene oxide adduct dicaprolactonate di(meth)acrylate, and di(meth)acrylates of polyhydric alcohols such as glycerin, pentaerythritol, diglycerin, ditrimethylolpropane, and dipentaerythritol; trifunctional monomers such as glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, and trimethyloloctane tri(meth)acrylate; and 3EO (ethylene oxide)-modified product, 6EO-modified product, 9EO-modified product (3EO-modified trimethylolpropane tri(meth)acrylate, 3EO-modified trimethylolethane tri(meth)acrylate, 3EO-modified trimethylolhexane tri(meth)acrylate, and the like) of these monomers; and tetrafunctional or higher functional monomers such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol hexa(meth)acrylate, tripentaerythritol octa(meth)acrylate, and tripentaerythritol polyalkylene oxide hepta(meth)acrylate. Among these, preferable examples include trimethylolpropane triacrylate (TMPTA; trifunctional), ditrimethylolpropane tetraacrylate (DITMPTA; tetrafunctional), dipentaerythritol hexaacrylate (DPHA; hexafunctional), and hexanediol diacrylate (HDDA; bifunctional).

Examples of the vinyl ether group-containing (meth)acrylate-based compound include 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 3-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, and 2-(vinyloxyisopropoxyisopropoxy)ethyl (meth)acrylate.

When the polyfunctional monomer is used, the proportion of the polyfunctional monomer in the photopolymerizable compound is preferably 5 mass% or less, and more preferably 3 mass% or less. When the polyfunctional monomer is used, the total proportion of the hydroxyl group-containing polyfunctional monomer (A) and the polyfunctional monomer in the photopolymerizable compound is preferably 2 mass% or more and 20 mass%.

In the ink composition, the total proportion of photopolymerizable compounds having a glass transition temperature of 10°C or lower contained in the photopolymerizable compound is preferably 20 mass% or more and 60 mass% or less, and more preferably 25 mass% or more and 50 mass% or less from the viewpoint of flexibility and stretchability. Examples of the photopolymerizable compound having a glass transition temperature of 10°C or lower include the above-described components. Examples of the monofunctional monomer having a glass transition temperature of 10°C or lower include methyl acrylate, ethyl acrylate, n-butyl acrylate, n-hexyl methacrylate, 2-ethylhexyl (meth)acrylate, iso-nonyl acrylate, tetrahydrofurfuryl (meth)acrylate, isooctyl (meth)acrylate, isoamyl acrylate, isomyristyl acrylate, lauryl acrylate, benzyl acrylate, phenoxyethyl acrylate, and ethyl carbitol acrylate. Examples of the polyfunctional monomer and/or polyfunctional oligomer having a glass transition temperature of 10°C or lower include polyethylene glycol (400) diacrylate, polyethylene glycol (600) diacrylate, alkoxylated hexanediol diacrylate, ethoxylated (30) bisphenol A diacrylate, alkoxylated neopentyl glycol diacrylate, ethoxylated (3) trimethylolpropane triacrylate, ethoxylated (6) trimethylolpropane triacrylate, ethoxylated (9) trimethylolpropane triacrylate, propoxylated (3) trimethylolpropane triacrylate, triethylene glycol dimethacrylate, tetraethylene glycol dimethacrylate, polyethylene glycol (600) dimethacrylate, ethoxylated (10) bisphenol A dimethacrylate, 1,12-dodecanediol dimethacrylate, urethane acrylate oligomer, and polyester acrylic oligomer.

### <Photopolymerization initiator>

The ink composition may contain a photopolymerization initiator. When an electron beam is used as an actinic energy ray, the ink composition may or may not contain a photopolymerization initiator. The photopolymerization initiator may be used singly or in combination of two or more thereof.

Examples of the photopolymerization initiator include acylphosphine oxide-based polymerization initiators such as bis-2,6-dimethoxybenzoyl-2,4,4-trimethylpentylphosphine oxide, 2,4,6-trimethylbenzyl-diphenylphosphine oxide (TPO), bis(2,4,6-trimethylbenzoyl)phenylphosphine oxide (Omnirad 819 or SB-PI719), and ethoxy(2,4,6-trimethylbenzoyl)phenylphosphine oxide (TPOL); α-hydroxyketone-based polymerization initiators such as 2-hydroxy-1-{4-[4-(2-hydroxy-2-methyl-propionyl)-benzyl]-phenyl}-2-methyl-propane-1-one (Omnirad 127), 2-hydroxy-4'-hydroxyethoxy-2-methylpropiophenone (Omnirad 2959), 1-hydroxycyclohexyl phenyl ketone (Omnirad 184), oligo{2-hydroxy-2-methyl-1-[4-(1-methylvinyl)phenyl]propanone} (ESACURE ONE), 2-hydroxy-2-methyl-1-phenylpropane-1-one, 1-[4-(2-hydroxyethoxy)-phenyl]-2-hydroxy-2-methyl-1-propane-1-one, and bis[4-(2-hydroxy-2-methylpropanoyl)phenyl]ether (KIP 160); benzophenone-based compounds (such as 4,4'-diethylaminobenzophenone), 2-methyl-1-(4-methylthio)phenyl-2-morpholinopropane-1-one, 4'-(methylthio)-α-morpholino-α-methylpropiophenone, thiophenyl-based compounds (4-benzoyl-4'-methyldiphenylsulfide), thioxanthone-based compounds (2,4-diethylthioxanthone, 1-chloro-4-propoxythioxanthone, isopropylthioxanthone), 2,2-dimethyl-2-hydroxyacetophenone, 2,2-dimethoxy-2-phenylacetophenone, 2-benzyl-2-dimethylamino-1-(morpholinophenyl)-butane-1-one, 4-benzoyl-4'-methyldiphenylsulfide, ethyl Michler's ketone, polymer type initiators (Omnipol TP, Omnipol BP), and 1-[4-(4-benzoylphenylsulfanyl)phenyl]-2-methyl-2-(4-methylphenylsulfonyl)propane-1-one (ESACURE1001M).

The content of the photopolymerization initiator is not particularly limited. As an example, in the case of using ultraviolet light (UV) or ultraviolet light (light emitting diode (LED)) as the light source, the content of the photopolymerization initiator is preferably 3 mass% or more, and more preferably 4 mass% or more in the ink composition. The content of the photopolymerization initiator is preferably 25 mass% or less, and more preferably 15 mass% or less in the ink composition. When the content of the photopolymerization initiator is within the above range, the ink composition can have sufficient curability and internal curability, and can be produced at low cost.

### <Sensitizer>

In the ink composition, a photosensitizer (compound), which has light absorption characteristics in a wavelength range of 400 nm or more, mainly in the ultraviolet light wavelength range, and exhibits a sensitizing function for the curing reaction by light having a wavelength in this range, can be further used together with the polymerization initiator, for the purpose of promoting curability to ultraviolet light from a light emitting diode (LED) as a light source, and the like. The phrase "exhibiting a sensitizing function by light having a wavelength of 400 nm or more" means that the photosensitizer has light absorption characteristics in a wavelength range of 400 nm or more. By using such a sensitizer, the ink composition of the present invention can have improved LED curability.

Examples of the sensitizer include anthracene-based sensitizers such as 9,10-dibutoxyanthracene, 9,10-diethoxyanthracene, 9,10-dipropoxyanthracene, and 9,10-bis(2-ethylhexyloxy)anthracene; and thioxanthone-based sensitizers such as 4-isopropylthioxanthone. The sensitizer is preferably a thioxanthone-based sensitizer. Typical examples of commercially available products include trade name "DBA" and" DEA" (both manufactured by Kawasaki Kasei Chemicals Ltd.) as the anthracene-based sensitizer, and trade name "DETX", "ITX", "CPTX" (all manufactured by Lambson Limited) and "Omnipol TX" (manufactured by IGM) as the thioxanthone-based sensitizer. The sensitizer may be used singly or in combination of two or more thereof.

The content of the sensitizer is preferably 0 to 8 mass% in the ink composition. When the content exceeds 8 mass%, the effect is not improved, and excessive addition occurs, which is not preferable.

When a thioxanthone-based sensitizer is used as the sensitizer, the actinic energy ray-curable inkjet ink composition tends to change in color to yellow, and thus has a more yellowish hue than a color based on the pigment or the like (original hue). Therefore, it is preferable to appropriately determine the content of the thioxanthone-based sensitizer for each color. Specifically, the white ink composition and the clear ink composition, which are susceptible to such change in color, are preferably free of the thioxanthone-based compound as the sensitizer. Further, in the magenta ink composition and the cyan ink composition, the change in hue becomes a problem. Therefore, it is preferable to use the thioxanthone-based sensitizer within a range in which the problem does not occur in hue. In the black ink composition and the yellow ink composition, the color change does not affect the hue, and the actinic energy ray polymerizability is inferior to other hues. Therefore, it is preferable to use the thioxanthone-based compound in combination as the sensitizer.

### <Colorant>

An ink composition of each color can also be obtained by blending a colorant of each hue in the ink composition. As such a colorant, pigments and dyes conventionally used in normal photocurable inkjet ink compositions can be used without particular limitation. Pigments such as organic pigments and inorganic pigments are preferable in consideration of light resistance.

Examples of the organic pigment include dye lake pigments, azo-based pigments, benzimidazolone-based pigments, phthalocyanine-based pigments, quinacridone-based pigments, anthraquinone-based pigments, dioxazine-based pigments, indigo-based pigments, thioindigo-based pigments, perylene-based pigments, perinone-based pigments, diketopyrrolopyrrole-based pigments, isoindolinone-based pigments, nitro-based pigments, nitroso-based pigments, flavanthrone-based pigments, quinophthalone-based pigments, pyranthrone-based pigments, and indanthrone-based pigments. Examples of the inorganic pigment include carbon black, titanium oxide, red iron oxide, graphite, black iron oxide, chrome oxide green, and aluminum hydroxide.

Specific examples of the pigment for each typical hue include the following.

Examples of the yellow pigment for use as the yellow ink composition include C.I. Pigment Yellows 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, and 213. Preferred examples include C.I. Pigment Yellows 150, 155, 180, and 213.

Examples of the magenta pigment for use as the magenta ink composition include C.I. Pigment Reds 5, 7, 12, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, 270, and C.I. Pigment Violet 19. Preferred examples include C.I. Pigment Reds 122 and 202, and Pigment Violet 19.

Examples of the cyan pigment for use as the cyan ink composition include C.I. Pigment Blues 1, 2, 3, 15, 15:1, 15:2, 15:3, 15:4, 15:6, 16, 18, 22, 27, 29, and 60. Preferred examples include C.I. Pigment Blue 15:4.

Examples of the black pigment for use as the black ink composition include carbon black (C.I. Pigment Black 7).

Examples of the white pigment for use as the white ink composition include titanium oxide, and aluminum oxide. Preferred examples include titanium oxides surface-treated with various materials such as alumina and silica.

The content of the pigment in the ink composition is preferably 1 to 20 mass% with respect to the total amount of the ink composition. When the content of the pigment is less than 1 mass%, the image quality of the obtained printed matter tends to deteriorate. On the other hand, when the content is more than 20 mass%, the viscosity characteristics of the ink composition tend to be adversely affected.

### <Pigment dispersant>

The ink composition may contain a pigment dispersant as necessary. The pigment dispersant is used to improve the dispersibility of the pigment and the storage stability of the ink composition. As the pigment dispersant, those conventionally used can be used without particular limitation, and among them, a polymer dispersant is preferably used. Examples of the pigment dispersant include a carbodiimide-based dispersant, a polyesteramine-based dispersant, a fatty acid amine-based dispersant, a modified polyacrylate-based dispersant, a modified polyurethane-based dispersant, a multichain polymer nonionic dispersant, and a polymeric ionic surfactant. The pigment dispersant may be used singly or in combination of two or more thereof.

The pigment dispersant is preferably contained in an amount of 1 to 200 parts by mass when the total amount of the pigments to be used is 100 parts by mass. When the content of the pigment dispersant is less than 1 part by mass, the dispersibility of the pigment and the storage stability of the ink composition may deteriorate. On the other hand, the pigment dispersant can be contained in an amount of more than 200 parts by mass, but there may be no difference in effect. The lower limit of the content of the pigment dispersant is more preferably 5 parts by mass, and the upper limit is more preferably 60 parts by mass.

### <Other components>

Various additives can be added to the ink composition as necessary in order to develop various functionalities. Specifically, the ink composition may contain various additives such as a surfactant, an organic solvent, a polymerization inhibitor, a light stabilizer, a surface treatment agent, an ultraviolet absorber, an antioxidant, an antifoaming agent, an antifungal agent, an antirust agent, a thickener, a humectant, and a pH adjusting agent. In addition, a resin that functions as a vehicle but is not curable may be blended or may not be blended.

### <Surfactant (leveling agent)>

The surfactant (leveling agent) is not particularly limited, and examples thereof include a nonionic surfactant, a cationic surfactant, an anionic surfactant, and a betaine surfactant. Specific examples of the surfactant include silicone-based surfactants such as polyether-modified silicone oil, polyester-modified polydimethylsiloxane, and polyester-modified methylalkylpolysiloxane, fluorine-based surfactants, and acetylene-based surfactants.

Examples of the silicone-based surfactant include BYK-307, BYK-315N, BYK-331, BYK-333, BYK-347, BYK-348, BYK-349, BYK-345, BYK-377, BYK-378, and BYK-3455 (manufactured by BYK-Chemie GmbH).

Examples of the fluorine-based surfactant include F-410, F-444, and F-553 (manufactured by DIC Corporation), FS-65, FS-34, FS-35, FS-31, and FS-30 (manufactured by DuPont de Nemours, Inc.).

Examples of the acetylene-based surfactant include DYNOL 607, DYNOL 609, OLFINE E1004, OLFINE E1010, OLFINE E1020, OLFINE PD-001, OLFINE PD-002W, OLFINE PD-004, OLFINE PD-005, OLFINE EXP. 4001, OLFINE EXP. 4200, OLFINE EXP. 4123, and OLFINE EXP. 4300 (manufactured by Nissin Chemical Co., Ltd.), SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, and SURFYNOL 465 (manufactured by Evonik Industries AG).

When the surfactant is blended, the content of the surfactant is not particularly limited. As an example, the content of the surfactant is preferably 0.005 mass% or more, and more preferably 0.01 mass% or more in the ink composition from the viewpoint of improving the ejection stability of the ink composition from the inkjet head. The content of the surfactant is preferably 1.5 mass% or less, and more preferably 1 mass% or less in the ink composition.

### <Organic solvent>

The organic solvent is not particularly limited, and examples thereof include an ester-based organic solvent, an ether-based organic solvent, an ether ester-based organic solvent, a ketone-based organic solvent, an aromatic hydrocarbon solvent, and a nitrogen-containing organic solvent. When an organic solvent is blended, the content of the organic solvent is not particularly limited, and is, for example, preferably 5 mass% or less, and more preferably 2 mass% or less in the ink composition.

### <Polymerization inhibitor>

The polymerization inhibitor is not particularly limited, and examples thereof include hindered amines of N-CH3 type, N-H type, N-OR type, and the like, and polymerization inhibitors of phenol type, amine type, sulfur type, phosphorus type, and the like.

### <Ultraviolet absorber>

Examples of the ultraviolet absorber include a benzophenone-based ultraviolet absorber, a benzotriazole-based ultraviolet absorber, a salicylate-based ultraviolet absorber, a hydroxyphenyl triazine-based ultraviolet absorber, a cyanoacrylate-based ultraviolet absorber, and a nickel complex salt-based ultraviolet absorber.

### <Antioxidant>

Examples of the antioxidant include a phenol-based antioxidant, an amine-based antioxidant, a sulfur-based antioxidant, and a phosphorus-based antioxidant.

### <Antifoaming agent>

Examples of the antifoaming agent include a silicone-based antifoaming agent and a Pluronic (registered trademark)-based antifoaming agent.

### <Preparation of ink composition>

The method for preparing the ink composition is not particularly limited, and the ink composition can be prepared by adding all the above materials and mixing them with a bead mill, a three-roll mill, or the like. The ink composition may be prepared as follows. A pigment, a pigment dispersant, and a photopolymerizable compound are mixed to obtain a concentrated base ink in advance. Then, the concentrated base ink is mixed with a photopolymerizable compound, a photopolymerization initiator, and as necessary, additives such as a surfactant to achieve a desired composition of the ink composition.

As a base material on which the ink composition is printed, for example, a base material made of a floor material, acrylic, vinyl chloride, polyethylene terephthalate, polycarbonate, or the like is preferable. Printing can be performed without any problem as long as it is a conventional base material on which a photocurable inkjet ink composition is printed (paper, plastic film, capsule, gel, metal foil, glass, cloth, and the like).

Specific examples of the method for printing and curing the ink composition include a method of ejecting an ink composition onto a base material by an inkjet head for low viscosity, and then exposing the coating film of the ink composition of the present invention landed on the base material to light, thereby curing the coating film. For example, ejection (printing of an image) of the ink composition onto the base material can be performed by supplying the ink composition to a printer head for low viscosity of an inkjet recording printer, and ejecting the ink composition from the printer head so that the thickness of the coating film on the base material is, for example, 1 to 60 µm. Exposure and curing with light (curing of an image) can be performed by irradiating the coating film of the ink composition applied to the base material as an image with light.

As an inkjet recording printer that prints the ink composition, an inkjet recording printer including an inkjet head can be used. When a continuous type inkjet recording printer is used, an electrical conductivity-imparting agent is further added to the ink composition to adjust the electrical conductivity.

Examples of the light source for curing the coating film include ultraviolet light (UV), ultraviolet light (light emitting diode (LED)), electron beams, visible light and the like. The light source is preferably a light emitting diode (LED) that generates ultraviolet light having an emission peak wavelength in a range of 350 to 420 nm and electron beams from the environmental viewpoint. The ultraviolet light from the light emitting diode (LED) as a light source is defined as "light emitted from a light emitting diode that generates ultraviolet light having an emission peak wavelength in a range of 350 to 420 nm".

### EXAMPLES

Hereinafter, the present invention will be described more specifically with reference to Examples. The present invention is not limited to these Examples at all.

The raw materials used are shown below.

### <Hydroxyl group-containing polyfunctional monomer (A)>

2-Hydroxy-3-methacrylpropyl acrylate: manufactured by Shin-Nakamura Chemical Co., Ltd.
Glycerin diacrylate: manufactured by Toagosei Co., Ltd.
Isocyanuric acid ED-modified diacrylate: manufactured by Toagosei Co., Ltd.

### <(B) Monomer and/or oligomer having amino group and/or amide group>

Acryloylmorpholine: ACMO, manufactured by KJ Chemicals Corporation
Vinyl caprolactam: VCAP, manufactured by ISP Japan Ltd.
Amine-modified oligomer: acrylated amine compound having two photopolymerizable functional groups and two amino groups in the molecule, CN371NS: manufactured by Sartomer

### <(C) Monofunctional monomer other than (B)>

Benzyl acrylate: Miramer M1182HP, manufactured by Miwon Specialty Chemical Co., Ltd., glass transition temperature 6°C
Phenoxyethyl acrylate: Miramer M140, manufactured by Miwon Specialty Chemical Co., Ltd. glass transition temperature: 5°C
Ethyl carbitol acrylate: Viscoat #190, manufactured by Osaka Organic Chemical Industry Ltd., glass transition temperature: -67°C
Isobornyl acrylate: IBXA, manufactured by Osaka Organic Chemical Industry Ltd., glass transition temperature: 88°C

### <Polyfunctional monomer other than (A) and (B)>

1,6-Hexanediol diacrylate: SR238NS, manufactured by Sartomer
3-Methyl-1,5-pentanediol diacrylate: SR341, manufactured by Sartomer

### <Photopolymerization initiator>

TPO: 2,4,6-trimethylbenzoyl-diphenyl-phosphine oxide, manufactured by Lambson Limited

### <Sensitizer>

DETX: 2,4-diethylthioxanthone, manufactured by Lambson Limited

### <Polymerization inhibitor>

MEHQ: hydroquinone monomethyl ether

### <Surfactant (leveling agent)>

BYK-315N: silicone-based surface conditioner, solid content: 100%, manufactured by BYK-Chemie GmbH

### <Colorant>

PB15:4
PR122
PY150
PBk7

### <Pigment dispersant>

Dispersant 1: SS32000, manufactured by Lubrizol Japan Limited
Dispersant 2: PB821: manufactured by Ajinomoto Fine-Techno Co., Inc.

### <Base material>

Acrylic plate (Acrylite L·S manufactured by Mitsubishi Chemical Corporation)
PVC plate (T938, manufactured by C.I. TAKIRON Corporation)
PVC80 (manufactured by Lintec Corporation)

### <Production of actinic energy ray-curable inkjet ink composition>

A mixture was prepared by blending raw materials other than the photopolymerization initiator, the sensitizer, the polymerization inhibitor, and the leveling agent in the blending composition (mass%) in Table 1. The mixture was dispersed in an Eiger mill (using zirconia beads having a diameter of 0.5 mm as a medium) to obtain a concentrated base. The obtained concentrated base was blended with the photopolymerization initiator, the sensitizer, the polymerization inhibitor, and the leveling agent in the blending composition (mass%) in Table 1, to obtain actinic energy ray-curable inkjet ink compositions of Examples 1 to 12 and Comparative Examples 1 to 6.

### <Evaluation of printed matter>

The adhesion to the base material, flexibility, stretchability, alcohol resistance, and image quality (dot diameter) of the ink composition were evaluated using the actinic energy ray-curable inkjet ink compositions of Examples 1 to 12 and Comparative Examples 1 to 6, according to the following evaluation methods and evaluation criteria. The results are presented in Table 1. As printing conditions, printing was performed on a base material with a single pass printer (head: M5320 manufactured by Ricoh Co, Ltd.), and then curing was performed by LED irradiation (irradiation energy: 500 mJ).

### <Base material adhesion>

A cured coating film of each ink composition printed on an acrylic plate (Acrylite L·S, manufactured by Mitsubishi Chemical Corporation) was cross-cut with a cutter knife. A cellophane tape (product name: Cellotape (registered trademark), manufactured by Nichiban Co., Ltd.) was attached to the cut portion. Then, the cellophane tape was peeled off to evaluate the degree of peeling of the cured coating film according to the following criteria.

### [Evaluation criteria]

5: Peeling of the coating film is less than 5%
4: Peeling of the coating film is 5% or more and less than 15%
3: Peeling of the coating film is 15% or more and less than 35%
2: Peeling of the coating film is 35% or more and less than 65%
1: Peeling of the coating film is more than 65% Relative evaluation ranks 5 to 1 were given by visual observation.

Rank 5 or 4 was used as an acceptance criterion.

### <Flexibility>

A cured coating film of each ink composition printed on a PVC plate (T938, manufactured by C.I. TAKIRON Corporation) was bent at 180°C. Cracking of the coating film was visually observed and evaluated according to the following criteria.
5: No cracking of the coating film occurs
4: Cracking occurs at a portion of less than 10% of the entire bent portion
3: Cracking occurs at a portion of 10% or more and less than 30% of the entire bent portion
2: Cracking occurs at a portion of 30% or more and less than 50% of the entire bent portion
1: Cracking occurs at a portion exceeding 50% of the entire bent portion
Relative evaluation ranks 5 to 1 were given by visual observation.

Rank 5 or 4 was used as an acceptance criterion.

### <Stretchability>

A cured coating film of each ink composition printed on a PVC plate (T938, manufactured by C.I. TAKIRON Corporation) was cut into 2 cm × 5 cm, and the cut cured coating was stretched to 100%. Cracking of the coating film was visually observed and evaluated according to the following criteria.

### [Evaluation criteria]

5: No cracking of the coating film occurs at 100% stretching
4: Cracking occurs in stretching from 75% to less than 100%
3: Cracking occurs in stretching more than 50% to 75% or less
2: Cracking occurs in stretching more than 25% to 50% or less
1: Cracking occurs in stretching at 25% or less Relative evaluation ranks 5 to 1 were given by visual observation.

Rank 5 or 4 was used as an acceptance criterion.

### <Alcohol resistance>

A cured coating film of each ink composition printed on a PVC plate (T938, manufactured by C.I. TAKIRON Corporation) was rubbed ten times with a cotton swab containing 50% ethanol. The degree of removal of the coating film was visually observed and evaluated according to the following criteria.

### [Evaluation criteria]

5: The coating film is not removed even after rubbing with a cotton swab ten times
4: The coating film is removed at the time of rubbing with a cotton swab eight or nine times
3: The coating film is removed at the time of rubbing with a cotton swab six or seven times
2: The coating film is removed at the time of rubbing with a cotton swab four or five times
1: The coating film is removed at the time of rubbing with a cotton swab two or three times
Relative evaluation ranks 5 to 1 were given by visual observation.

Rank 5 or 4 was used as an acceptance criterion.

### <Image quality (dot diameter)>

Each ink composition was printed on PVC80 (manufactured by Lintec Corporation), and the same ink was printed at a low printing rate on the coating film of the ink composition having been printed, and then cured with a UV-LED light lamp manufactured by Phoseon Technology at a UV integrated light quantity of 180 mJ/cm² with a distance between the lamp and the ink applied surface set to 2 cm. The surface of the coating film was observed with a microscope manufactured by Keyence Corporation, and the diameter of the printed dot was measured.

### [Evaluation criteria]

5: The dot diameter is 75 µm or more
4: The dot diameter is 70 µm or more and less than 75 µm
3: The dot diameter is 65 µm or more and less than 70 µm
2: The dot diameter is 60 µm or more and less than 65 µm
1: The dot diameter is less than 60 µm
Rank 5 or 4 was used as an acceptance criterion.

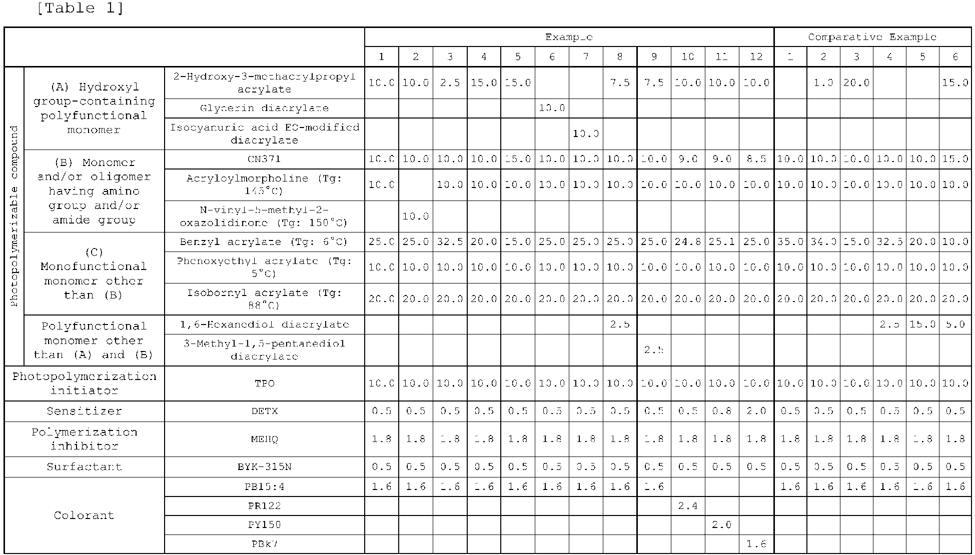

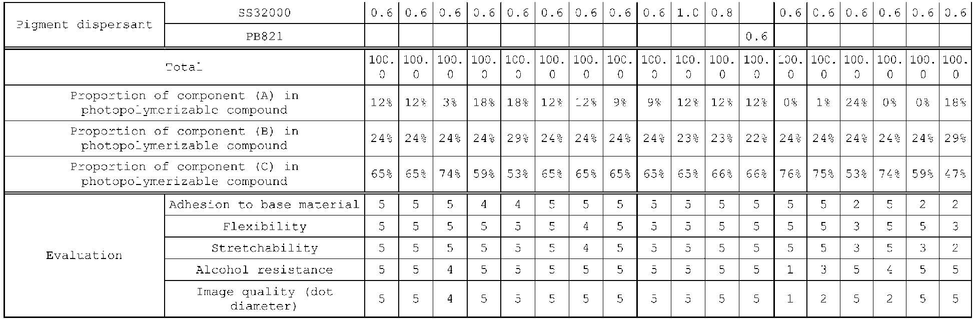

## Claims

1. An actinic energy ray-curable inkjet ink composition comprising a photopolymerizable compound,
wherein the photopolymerizable compound contains:
(A) a hydroxyl group-containing polyfunctional monomer;
(B) a monomer and/or oligomer having an amino group and/or an amide group; and
(C) a monofunctional monomer other than (B), and
in the photopolymerizable compound, a proportion of the hydroxyl group-containing polyfunctional monomer is 2 mass% or more and 20 mass% or less, and a proportion of the monofunctional monomer is 50 mass% or more.

2. The actinic energy ray-curable inkjet ink composition according to claim 1, wherein a proportion of the monomer and/or oligomer having an amino group and/or an amide group in the photopolymerizable compound is 10 mass% or more and 40 mass% or less.

3. The actinic energy ray-curable inkjet ink composition according to claim 1 or 2, wherein
the actinic energy ray-curable inkjet ink composition contains a polyfunctional monomer other than (A) and (B), and
a total proportion of the hydroxyl group-containing polyfunctional monomer and the polyfunctional monomer in the photopolymerizable compound is 20 mass% or less.

4. The actinic energy ray-curable inkjet ink composition according to claim 1 or 2, wherein the monomer and/or oligomer having an amino group and/or an amide group contains acryloylmorpholine and/or N-vinylcaprolactam.

5. The actinic energy ray-curable inkjet ink composition according to claim 4, wherein the monomer and/or oligomer having an amino group and/or an amide group contains an acrylated amine compound having two photopolymerizable functional groups and two amino groups in a molecule.

6. The actinic energy ray-curable inkjet ink composition according to claim 1 or 2, wherein a total proportion of photopolymerizable compounds having a glass transition temperature of 10°C or lower contained in the photopolymerizable compound is 20 mass% or more.

7. The actinic energy ray-curable inkjet ink composition according to claim 1 or 2, wherein the actinic energy ray-curable inkjet ink composition contains a colorant.
